# EUROPEAN PATENT SPECIFICATION

(11) **EP 2 417 187 B1**
(45) Date of publication and mention of the grant of the patent: **16.01.2013**
(21) Application number: 11717516.6
(22) Date of filing: 06.04.2011
(51) Int. Cl.: C08J 3/20, C08K 3/00, C08K 7/24, C08K 7/14, C08K 7/22, C08K 3/34

(54) **FLAME RETARDANT MASTERBATCH FOR THERMOPLASTIC POLYMERS AND PROCESS FOR ITS PRODUCTION**
FEUERFESTES MASTERBATCH FÜR THERMOPLASTISCHE POLYMERE UND VERFAHREN ZU SEINER HERSTELLUNG
MÉLANGE MAÎTRE D'IGNIFUGEANT POUR POLYMÈRES THERMOPLASTIQUES ET PROCÉDÉ DE PRODUCTION ASSOCIÉ

(30) Priority: 08.04.2010 WO PCT/IT2010/000147; 23.04.2010 WO PCT/IT2010/000175; 10.09.2010 WO PCT/IT2010/000390
(43) Date of publication of application: 15.02.2012
(73) Proprietor: Viba S.p.A., 00195 Roma (IT)
(72) Inventor: CAMPASOL, Josep, E-08580 Sant Quirze de Besora (ES)
(74) Representative: Palladino, Saverio Massimo
(86) International application number: PCT/EP2011/055345
(87) International publication number: WO 2011/124606

(56) References cited:
- WO-A2-03/078315

## Description

### Field of the invention

The present invention relates to a flame retardant masterbatch for thermoplastic polymers and to the process for its production.

### Background art

Thermoplastic polymers have the characteristic that they can be formed (for example by moulding) when they are brought to a sufficiently high temperature, and maintain at lower temperatures the shape imparted on them during processing, for example when returned to ambient temperature; due to this ease of processing they are applied in the production of a vast number of types of manufactured polymer articles. The latter generally consist of a base polymer (or a mixture of polymers), to which particular additives are added in order to confer desired properties to the manufactured article, such as for example a colour, anti-adhesive, anti-static or conductive, or flame retardant properties.

The additives could be added taking each time a weight of the same suitable for the polymer batch being processed (meaning by "batch" the quantity of polymer that is processed in a single production phase).

The modality by far most commonly adopted in the art of polymers for adding an additive to a polymeric formulation is however through the use of so-called "masterbatches", composite units that consist of a polymer (so-called carrier) and the desired additive. In these units, that generally come in the form of cylinders or spheres (or similar forms) with dimensions of approximately 1 to a few millimetres, are present a pre-metered quantity of the additive and the necessary minimum of a carrier polymer in order to ensure mechanical stability of the masterbatch; the additive quantity is suitable for conferring the desired property to the whole polymer (or mixture) of a typical production batch of polymeric formulations.

Since thermoplastic polymers are combustible materials, additives commonly used in their formulation are the so-called flame retardants. The combustion process of the polymeric materials passes through the phases of: heating; decomposition (pyrolysis); ignition and combustion; and flame propagation (with thermal feedback).

In the heating phase (due to external heat sources) the temperature of the material increases at a speed that depends on the intensity of the heat emitted by the source and on the characteristics of the material, such as its thermal conductivity, the latent heat of fusion and vaporization and the decomposition heat. When a sufficient temperature is reached, the material starts to degrade, forming gaseous and liquid compounds of lower molecular weight compared to the original polymer chains (decomposition). The speed of this phase depends on the intensity with which the polymeric material heats up. The concentration of the decomposition products, in the surrounding air, increases until it falls within the flammability range; the presence in this context of an ignition causes the combustion of the mixture to start. The produced heat is partly radiated to the material (thermal feedback), which feeds the above mentioned phases and leads to self-sustaining of the flame, until the consumption of the fuel (the polymer and the vapours formed by it) or of the comburant (oxygen) causes the extinction of the flame.

The action of the flame retardants consists in eliminating or limiting one of the factors described above, by acting physically, chemically, or both, upon the liquid (material that melts), solid and gaseous fractions originated in the process.

The physically-acting flame retardants act by decreasing the efficiency of the thermal feedback, diluting the combustion mixture, or forming a protective layer on the solid polymeric material, that is thus shielded from the oxygen-rich gaseous phase.

The chemically-acting flame retardants can act through gas phase reactions, producing radicals that remove the chemically-active species involved in the maintenance and in the propagation of the flame; or through condensed phase reactions, that can consist in the formation of a protective carbonaceous layer (called "char") on the surface of the polymer, that thermally isolates the latter and reduces the contact between the pyrolysis products and the oxygen, or by forming swellings on the surface of the polymer that raduce its thermal exchange characteristics, retarding the thermal feedback process.

Flame retardants, depending on their nature, can be added to the polymer either through a genuine chemical reaction that binds them to the chain of the same or simply by physically mixing them with the material, or with intermediate modalities.

Many types of flame retardants are known, which act through different mechanisms, like aluminium or magnesium hydroxides, boron compounds, phosphorus compounds, or systems based on halogenated compounds. The latter, generally used together with a synergistic component like antimony trioxide, are the most widespread, as they offer an optimal balance of proportion quantity, cost and final performances. The combustion of these products however leads to the formation of harmful fumes; in particular, among the most widely used compounds, there are perbrominated diphenyl derivatives, like decabromodiphenylethane or decabromodiphenylether. In flame conditions these compounds may form dioxins and brominated furans, which often are the real cause of death in the event of fire. Halogenated compounds do in any case pose problems in the end-of-life thermodestruction phase of the product in which they are present, or in some cases also during their use; for example, some of these compounds, inserted in a manufactured article, tend to migrate to the surface, with the formation of fines and therefore the manufactured articles which contain them cannot be used in the food packaging sector.

The most recent developments in the art have highlighted the possible use, as flame retardant additives, of compositions containing carbon nanotubes (generally abbreviated as CNTs); these compositions have a flame retardant action of the chemical type, and in particular based on the formation, during the combustion of the polymer, of a "char" layer on the surface of the same. CNTs are hollow structures of indefinite length, formed by carbon atoms that are arranged on cylindrical surfaces (either one single surface in the case of the so-called "Single-Walled NanoTubes", abbreviated "SWNT", or more concentric walls in the case of the so-called "Multi-Walled NanoTubes", abbreviated "MWNT"). CNTs can be produced with laboratory reactors, for example by chemical-vapour deposition techniques ("CVD"), laser ablation, or others. CNTs are also marketed, albeit in low volumes, by some companies, such as Bayer, Arkema, Hyperion Catalysis International, Unidym and Nanocyl.

Patent application EP 1471114 A1 describes thermoplastic resins, in particular polycarbonates and styrene resins, containing CNTs and a flame retardant chosen among the known ones.

Patent application US 2008/0293877 A1 describes flame retardant compositions containing between 0.05% and 1% by weight of CNTs in a crosslinked silicone matrix; these compositions are produced by forming a first mixture between the CNTs and a polysiloxane containing vinyl groups; by adding to this mixture a second polysiloxane, containing hydrosilane groups; and by making the two silane compounds cross-link, for example by heating. The flame retardant compositions in this document have the advantage, compared to others previously known, of having a much reduced content of CNTs, but require an elaborate preparation.

Patent application US 2007/0096083 A1 describes nanocomposite materials for the production of substrates for use in microelectronics; the composite materials of this document comprise a polymer base in which are dispersed CNTs and a second material (cited are oxides such as alumina and silica) in form of nanoparticles having a diameter of approximately less then 100 nanometers (nm), preferably between about 20 and 40 nm.

International patent application WO 03/078315 A2 describes the addition to polymers of a mixture of carbon nanotubes and layered silicate nanoparticles; the mixture or carbon nanotubes and layered silicate nanoparticles is said to improve some physical properties of the composition, among which, as flame retardants. Although no precise indication is given in this document about the dimensions of the silicate nanoparticles, as confirmed also by the indications given in US 2007/0096083 A1, the term "nano" is generally intended in the field of materials science as referring to particles having dimensions well below 1 micrometer (µm), and generally between about a few nanometers and about 100 nm.

### Summary of the invention

Aim of the present invention is that of providing a masterbatch to be employed as flame-retardant additive in thermoplastic polymers, and a process for the production of said masterbatch, improved compared to the known technique.

These aims are achieved with the present invention which in a first aspect concerns a flame retardant masterbatch for use in thermoplastic polymers, comprising a carrier polymer and a mixture of carbon nanotubes and a second component, in which the carbon nanotubes are present between 0.1 % and 5% by weight and the second component is present between 5% and 65% by weigth, characterized in that said second component is chosen among phyllosilicates, silicates with a three-dimensional crystalline structure, calcium carbonate, zinc borates, zinc stannates or melamine cyanurate or a mixture of two or more of these compounds, and is present in form of powders having maximum dimensions below about 30 µm, average dimensions (D₅₀) below about 10 µm and minimum dimensions greater than 1 µm.

Melamine cyanurate (CAS Registry Number 37640-57-6) is an equimolar adduct of melamine and cyanuric acid (or 1,3,5-triazine-2,4,6-triol), in which the two molecules are reciprocally attracted by an extensive network of hydrogen bonds, thus forming a crystalline structure.

Phyllosilicates are minerals that consist of planes of tetrahedra having oxygen atoms at the vertices and a silicon atom at the centre, in which any tetrahedron is bound to three next tetrahedra by sharing with each of these one of its three oxygen atoms laying in a plane; the various planes, on the other hand, are bound to each other only by Van der Waals forces or by electrostatic forces due to cations (for example sodium or potassium) that compensate the charge imbalances due to the partial substitution of the silicon atoms with lower valence atoms, generally aluminum; due to this microstructure, phyllosilicates are typically formed by planar crystals formed by "sheets" that can be delaminated with relative ease (for example in the case of micas), or easily slide on top of each other producing minerals greasy to the touch (as in the characteristic case of talc).

Silicates with a three-dimensional crystalline structure are those wherein the tetrahedra, or at least part of them, share all four vertices (by sharing the oxygen atoms). Typical examples of silicates with a three-dimensional structure are tectosilicates, which include in particular feldspars, that also result in being the preferred inorganic components, both because of a better synergy of flame retardancy with the CNTs and for cost reasons.

The second component must be present in the form of powders, with maximum dimensions under approximately 30 µm and average dimensions (D₅₀) generally smaller than 10 µm and minimum dimensions greater than 1 µm; for example, in the case of silicates, powders suitable for use in the present invention are those with an average granulometry between approximately 2 and 7 µm, and preferably around 5 µm.

The second component has a synergistic effect on the flame retardant functionality of the CNTs, maintaining and at times improving the flame retardant classifications even with a reduced quantity of CNTs in the masterbatch; the inorganic component furthermore improves the mechanical characteristics of the final manufactured article and, since it allows to reduce the quantity of CNTs required to obtain the specific product requirements, reduces the cost of the masterbatch.

### Detailed description of the invention

In the description that follows, all percentages are by weight (b.w.), unless stated otherwise.

The masterbatch contains minimum quantities of CNTs and second component of respectively 0.1% and 5% b.w., whereas maximum quantities of CNTs and second component are respectively 5% and 65% b.w., the complement to 100 being constituted by the carrier polymer. The most commonly used carrier polymers are the linear low-, low-, and high-density polyethylenes (respectively identified in the art with the abbreviations LLDPE, LDPE and HDPE), polypropylenes (homopolymer as well as copolymers), and ethylene vinyl acetate (EVA).

The single masterbatch units of the invention generally have a weight of less than 0.1 g. With the previously described formulations, in order to impart flame retardant properties on thermoplastic polymer batches, the masterbatches of the invention must be added to the batch in such quantity as to constitute between approximately 10% and 40% b.w. of the total mixture.

The thermoplastic polymers that will constitute the final manufactured articles, to which the flame retardant masterbatches of the invention can be added, must be chemically compatible with the carrier polymers of the masterbatch. This condition is obviously fulfilled when the polymer of the manufactured article and the carrier polymer are the same, but it is sufficient for these polymers not to give rise to phase separation; for example LDPE can be employed as carrier polymer for a masterbatch intended for use in polypropylene. Another general rule for choosing the carrier polymer is that its fluidity (in terms of MFI, "melt flow index") should be higher or equal to that of the thermoplastic polymer to which the masterbatch must be added.

The flame retardant masterbatches of the invention are particularly suitable for use in polyolefins, and even more so in high-density polyethylene (HDPE). For thermoplastic polymers other than HDPE, efficient flame retardant additives are commercially available, but at a higher cost, to which the additives of the invention represent an advantageous alternative. In the case of HDPE, on the other hand, there are currently no flame retardant additives available that could effectively substitute decabromodiphenylethane or decabromodiphenylether. The reason is that this polymer, compared to other thermoplastic polymers, hardly forms "char" in sufficient quantity and thus passes the tests for flame retardant properties less easily; therefore, in order to obtain properties useful for industrial applications, flame retardant additives must be employed in high percentages by weight compared to the total formulation of the final manufactured article; this, however, entails considerable modifications of the final characteristics of the manufactured article itself, such as its impact or stretch resistance. The masterbateches of the present invention overcome this problem, ensuring the achievement of target flame retardant propertis with a comparatively lower total amount of additives.

In a second aspect, the invention concerns a process for the production of the previously described masterbatches, that consists in mechanically mixing the components in turbo-mixers of variable speed, and extruding the mixture on co-rotating twin screw extruders, provided with degassing system, with ratio I/d > 36 and balanced screw profile between grinding zone and dispersion zone.

The inventor has verified that with particular mixing and especially extrusion parameters it is possible to create a strong bond between CNTs and second component. This bond in a situation of pyrolysis creates optimum char.

In the first phase of the process, the components of the masterbatch, i.e. the CNTs, the second component (single or a mixture, as defined above) and the carrier polymer, are weighed individually and introduced into a variable speed turbo-mixer not equipped with potentiometer, and supplied with a system of mixing paddles with 4 or 5 blades and low profile (for example 3 mm), to encourage the intimate mixing of the components. The proportioning of the components to be employed in the production of the flame retardant masterbatch vary as a function of the thermoplastic polymers to which they are destined and of the required flame retardant classifications. The carrier polymer is employed in the form of powders having a granulometry between 200 and 700 pm, the CNTs in the form of aggregates with a diameter of the order of about ten nanometres and a length of the order of a few microns, and the second component in the form of powders having a granulometry between 1 and 30 µm.

Preferably, the CNTs and the polymer are premixed under mild conditions (rotation speed of the paddle not higher than 500 rpm), after which the second component is added; then the mixing, initially in mild conditions, is carried out with rotation speed of the paddles not higher than 500 rpm, and subsequently at a speed between 1000 and 1250 rpm, whilst raising the system temperature to values between approximately 40 and 70 °C.

Alternatively, it is possible to feed the necessary components in turn in the form of masterbatch to the mixer, i.e. as granules comprising CNTs in a carrier polymer, granules comprising the second component in a carrier polymer and, if necessary for regulating the quantities and obtaining desired concentrations of the components in the final masterbatch, granules of the sole carrier polymer; the polymer used in these granules is preferably the same for all.

The thus obtained mixture is fed, still hot, to a co-rotating twin screw extruder, or to a kneader with rotary and oscillatory axis, known in the art as "Buss kneader", produced by the company Buss AG of Pratteln (Switzerland); the extruder or the kneader must have a degassing zone. The thermal profile of the extruder or the kneader is such that, during its movement through the apparatus, the mixture passes from a temperature between approximately 120 and 160 °C at intake up to an output temperature that can be between approximately 190 and 280 °C, as a function of the melting point of the carrier polymer; the particular profile is optimized as a function of this polymer, according to principles known in the art. The extrudate obtained at the outlet of the extrusion (or kneading) section is then cut into the required sizes, for example with a die of the traditional type on the head of the extruder to obtain granules of cylindrical form (2 mm x 3 mm), or by water cutting (for example with systems known in the art as "under water" or "water ring") to obtain discs or round granules (1 mm of diameter).

The thus obtained masterbatches (in any form) then undergo processes standard in the art of screening, to eliminate granules of the wrong size, and drying for the final drying. The dried product is eventually packaged in paper and/or aluminium bags.

The invention will be further illustrated by the following examples.

### EXAMPLE 1

Preparation of first a flame retardant masterbatch according to the invention.

2.15 g of granules of CNTs with dimensions between 200 and 300 µm, 42.80 g of feldspar in the form of powders with a granulometry between 1 and 30 µm, and 55.05 g of low-density polyethylene (LDPE) powder having a "melt flow index" (mfi) of 20 and with dimensions between 200 and 700 µm are weighed.

The CNTs and LDPE are fed to a turbo-mixer (produced by the company Caccia of Samarate, VA) and a first mild mixing phase is set at 500 rpm for 30 seconds. The mixing is then interrupted, the turbo-mixer is opened, its walls are cleaned (letting the powder adherent to the walls fall back into the mixed mass) and the feldspar is added. Initially, mixing is at 500 rpm for 30 seconds, to then change to a mixing phase at 1250 rpm for 5 minutes, in the meantime heating the system until the mixture has a temperature of 70 °C. The product of the mixing is presented as perfectly homogeneous, not very powdery and smooth.

The mixture thus obtained is fed directly to the loading hopper placed on a co-rotating twin screw extruder (model 40EV033 by the company Comac of Cerro Maggiore, MI), in which the temperature increases along the direction of movement of the mixture from a value of 160 °C in the inlet chamber to up to 230 °C at the exit of the extruder.

The "spaghetto" is cut into cylindrical pieces at the head of the extruder using a 4-bladed cutter and subjected to three subsequent screening operations to recover only the pieces with dimensions between 2 x 3 mm, that are then packaged in bags.

### EXAMPLE 2

Preparation of second a flame retardant masterbatch according to the invention.
A masterbacth is produced following the procedure described in Example 1, using in this case as starting materials 2.4 g of the same granules of CNTs of said Example and 2.4 g of Minex^{®} 7, a sodium-potassium alumina silicate sold by The Cary Company of Addison, Illinois (USA) with maximum dimensions below 7.0 µm and D₅₀ of 3.5 µm; the balance to 100 g is HDPE in form of powder having a MFI of 20 and with dimensions between 200 and 700 µm. The weight percent composition of this sample is reported in Table 1 below.

### EXAMPLES 3 - 7

Preparation of flame retardant masterbatches according to the invention.

Five masterbatch compositions are prepared following the same procedure described in Example 2, but mixing starting components in the percentage amounts defined in Table 1. Melamine cyanurate, talc and calcium carbonate have D₅₀ values of 10 µm, 7 µm and 2 µm, respectively.

**Table 1**

| Example | 2 | 3 | 4 | 5 | 6 | 7 |
|---|---|---|---|---|---|---|
| CNTs (%) | 2.4 | 2.4 | 2.4 | 2.4 | 2.4 | 2.4 |
| Minex^{®} 7 (%) | 2.4 | 5 | 30.0 | / | / | / |
| Melamine cyanurate | / | / | / | 5 | / | / |
| Talc | / | / | / | / | 5 | / |
| Calcium carbonate | / | / | / | / | / | 5 |
| HDPE (%) | 95.2 | 92.6 | 67.6 | 92.6 | 92.6 | 92.6 |

### EXAMPLE 8 (COMPARATIVE)

Preparation of a first flame retardant masterbatch according to the prior art.

A masterbatch is produced following the procedure described in Example 2, but using materials and weight ratios described in International patent application WO 03/078315 A2; in particular, the composition of sample 7 in Table 2 of said patent document is chosen, being this sample the one showing the best flame retardant properties among those tested in said patent. The composition of this comparative example thus contains 2.4% CNTs (in particular, MWNTs), 2.4% of Dellite 72T (a montmorillonite, namely, an organoclay, with average dimensions 8 nm) and 95.2% HDPE.

### EXAMPLE 9 (COMPARATIVE)

Preparation of a second flame retardant masterbatch according to the prior art.

The preparation of Example 8 is repeated, using in this case 2.4% of Aerosil 200 (a kind of colloidal silica with average dimensions 12 nm) in place of Dellite 72T.

### EXAMPLE 10

Specimens of masterbatches produced in Examples 2 to 7 (of the invention) and 8 and 9 (comparative) are subjected to a test of flame retardant properties.

40 g of granules of each sample are placed in a square (8 x 8 cm) open aluminum container, which in its turn is positioned under a hood; venting is turned off, to avoid any possible influence of air flow on the tests. Each specimen is set to fire exposing it to a 15 cm long reducing flame from a Bunsen burner during 5 minutes; the flame from the torch is then put out, and the temperature trend of the specimen is recorded. The temperature is measured with a thermocouple positioned above the specimen, at a distance of 4 cm. The results of these tests are summarized in Table 2: in the first column are reported the times of temperature measure after putting out the external flame; the sign "/" indicates extinguished fire.

**Table 2**

| | Recorded temperature (°C) | | | | | | | |
|---|---|---|---|---|---|---|---|---|
| Time (min) | Ex. 2 | Ex.3 | Ex. 4 | Ex. 5 | Ex. 6 | Ex. 7 | Ex. 8 | Ex. 9 |
| 2 | 47 | 80 | 29 | 63 | 30 | 32 | 103 | 122 |
| 4 | 51 | 92 | / | 54 | 38 | 41 | 198 | 133 |
| 6 | 58 | 97 | / | / | / | / | 209 | 115 |
| 8 | 79 | 81 | / | / | / | / | 214 | 82 |
| 10 | 77 | 65 | / | / | / | / | 204 | 69 |
| 12 | 67 | 53 | / | / | / | / | 173 | 55 |
| 14 | 59 | 40 | / | / | / | / | 148 | 47 |
| 16 | 52 | / | / | / | / | / | 115 | 45 |
| 18 | 45 | / | / | / | / | / | 86 | 42 |
| 20 | 41 | / | / | / | / | / | 66 | 41 |
| 22 | 37 | / | / | / | / | / | / | 38 |

The results in Table 2 show that in most of the specimens prepared according to the invention the fire self-extingushes in shorter (or much shorter) time compared to the two comparative specimens of examples 8 and 9; even the specimen having the worst behavior among those of the invention, the specimen of example 2 in which the fire is not completely extinguished after 22 minutes, still has a temperature trend much better than that of the two comparative specimens, reaching a maximum T of 79 °C compared to values of 214 °C and 133 °C, respectively, for the two comparative specimens.

The explanation of this behavior has not been completely understood yet, but a possibility is that it is due to a better (more homogeneous) mixing of the second component in the blend molten polymer/CNTs when this has a micrometric size, rather then when it has a nanometric size. The inventors have in fact observed that compositions prepared with the second component in nanometric range (according to the prior art) tend to have in molten state very high viscosity values compared to the compositions of the invention; this also limits the possibility of adding high amounts (e.g., more than 10%) of the second component in nanometric dimensions, while in the compositions of the present invention such component can be added in amounts up to 65% of the total weight of the composition.

## Claims

1. A flame retardant masterbatch for use in a thermoplastic polymer, comprising a carrier polymer and a mixture of carbon nanotubes and a second component, in which the carbon nanotubes are present between 0.1 % and 5% by weight and the second component is present between 5% and 65% by weigth, **characterized in that** said second component is chosen among phyllosilicates, silicates with a three-dimensional crystalline structure, calcium carbonate, zinc borates, zinc stannates or melamine cyanurate or a mixture of two or more of these compounds, and is present in form of powders having maximum dimensions below about 30 µm, average dimensions (D₅₀) below about 10 µm and minimum dimensions greater than 1 µm.

2. The flame retardant masterbatch according to claim 1, wherein the second component is aluminosilicate.

3. The flame retardant masterbatch according to any one of claims 1 or 2, wherein the aluminosilicate has an average granulometry between approximately 2 and 7 µm.

4. The flame retardant masterbatch according to any one of claims 1 to 3, wherein the carrier polymer has a higher MFI index than the thermoplastic polymer to which the masterbatch must be added.

5. The flame retardant masterbatch according to claim 4, wherein said carrier polymer is chosen among linear low-, low- or high-density polyethylenes, polypropylene, polypropylene copolymers, and ethylene vinyl acetate.

6. The flame retardant masterbatch according to any one of claims 1 to 5, wherein said thermoplastic polymer is high-density polyethylene.

7. A process for the production of a flame retardant masterbatch of any one of claims 1 to 6, comprising the following phases of:
- pre-mixing carbon nanotubes and carrier polymer in powder form in a mixer, with paddle rotation speed not higher than 500 rpm;
- adding to the pre-mixture at least a second component consisting in a compound chosen among phyllosilicates, silicates with a three-dimensional crystalline structure, calcium carbonate, zinc borates, zinc stannates or melamine cyanurate or a mixture of two or more of these compounds, and mixing, initially at a paddle speed not higher than 500 rpm and subsequently at a paddle speed between 1000 and 1250 rpm, with contemporaneous heating of the mixture to a temperature between 40 and 70 °C;
- feeding the still hot mixture thus obtained to a co-rotating twin screw extruder or to a kneader with rotary and oscillatory axis provided with a degassing zone, the thermal profile of which increases from the mixture feeding zone towards the discharge zone, and is such that the outlet temperature of the extruded or kneaded material is between approximately 190 and 280 °C, as a function of the melting point of the carrier polymer;
- cutting the mixture at the head of the extruder or kneader, obtaining masterbatches in the form of cylindrical, disk-like or round granules of the desired dimensions.

8. The process according to claim 7, wherein the carrier polymer employed in the pre-mixing phase has a granulometry between 200 and 700 µm.

9. The process according to any one of claims 7 or 8, wherein the second component is employed in the form of powders with a granulometry between 1 and 30 µm.

10. The process according to any one of claims 7 to 9, wherein the carbon nanotubes and the second component are employed in turn in the form of masterbatch.

11. The use of a masterbatch of any one of claims 1 to 6 for the production of a thermoplastic polymer batch, wherein during production said masterbatch is added to said polymer in such quantity as to constitute between approximately 10% and approximately 40% by weight of the total mixture.

## Patentansprüche

1. Flammschutzmittel-Masterbatch zur Verwendung in einem thermoplastischen Polymer, umfassend ein Trägerpolymer und eine Mischung von Kohlenstoffnanoröhren und einer zweiten Komponente, worin die Kohlenstoffnanoröhren in einer Menge zwischen 0,1 und 5 Gew.-% vorliegen und die zweite Komponente in einer Menge zwischen 5 und 65 Gew.-% vorliegt, **dadurch gekennzeichnet, dass** die zweite Komponente aus Schichtsilikaten, Silikaten mit dreidimensionaler Kristallstruktur, Calciumcarbonat, Zinkboraten, Zinkstannaten oder Melamincyanurat oder einer Mischung von zwei oder mehr dieser Verbindungen ausgewählt ist und in Form von Pulvern mit maximalen Abmessungen von weniger als etwa 30 µm, durchschnittlichen Abmessungen (D₅₀) von weniger als etwa 10 µm und minimalen Abmessungen von mehr als 1 µm vorliegt.

2. Flammschutzmittel-Masterbatch nach Anspruch 1, wobei es sich bei der zweiten Komponente um ein Aluminosilikat handelt.

3. Flammschutzmittel-Masterbatch nach einem der Ansprüche 1 oder 2, wobei das Aluminosilikat eine durchschnittliche Granulometrie zwischen ungefähr 2 und 7 µm aufweist.

4. Flammschutzmittel-Masterbatch nach einem der Ansprüche 1 bis 3, wobei das Trägerpolymer einen höheren MFI-Index aufweist als das thermoplastische Polymer, dem der Masterbatch zuzusetzen ist.

5. Flammschutzmittel-Masterbatch nach Anspruch 4, wobei das Trägerpolymer aus linearem Polyethylen niedriger Dichte, Polyethylen niedriger Dichte, Polyethylen hoher Dichte, Polypropylen, Polypropylen-Copolymeren und Ethylen-Vinylacetat ausgewählt ist.

6. Flammschutzmittel-Masterbatch nach einem der Ansprüche 1 bis 5, wobei es sich bei dem thermoplastischen Polymer um Polyethylen hoher Dichte handelt.

7. Verfahren zur Herstellung eines Flammschutzmittel-Masterbatch gemäß einem der Ansprüche 1 bis 6, bei dem man:
- Kohlenstoffnanoröhren und Trägerpolymer in Pulverform in einem Mischer mit einer Schaufeldrehgeschwindigkeit von höchstens 500 U/min vormischt,
- mindestens eine zweite Komponente, die aus einer aus Schichtsilikaten, Silikaten mit dreidimensionaler Kristallstruktur, Calciumcarbonat, Zinkboraten, Zinkstannaten oder Melamincyanurat ausgewählten Verbindung oder einer Mischung von zwei oder mehr dieser Verbindungen besteht, zu der Vormischung gibt und zunächst bei einer Schaufelgeschwindigkeit von höchstens 500 U/min und danach bei einer Schaufelgeschwindigkeit zwischen 1000 und 1250 U/min unter gleichzeitigem Erhitzen der Mischung auf eine Temperatur zwischen 40 und 70°C mischt;
- die so erhaltene noch heiße Mischung einem gleichsinnig drehenden Doppelschneckenextruder oder einem Kneter mit Drehachse und Schwingachse mit einer Entgasungszone zuführt, dessen Temperaturprofil von der Mischungszuführungszone zur Austragszone zunimmt und so beschaffen ist, dass die Auslasstemperatur des extrudierten bzw. gekneteten Materials in Abhängigkeit vom Schmelzpunkt des Trägerpolymers zwischen ungefähr 190 und 280°C liegt;
- die Mischung am Kopf des Extruders oder Kneters schneidet, wobei man Masterbatches in Form von zylindrischem, scheibenartigem oder rundem Granulat mit den gewünschten Abmessungen erhält.

8. Verfahren nach Anspruch 7, bei dem das in der Vormischphase eingesetzte Trägerpolymer eine Granulometrie zwischen 200 und 700 µm aufweist.

9. Verfahren nach einem der Ansprüche 7 oder 8, bei dem man die zweite Komponente in Form von Pulvern mit einer Granulometrie zwischen 1 und 30 µm einsetzt.

10. Verfahren nach einem der Ansprüche 7 bis 9, bei dem man die Kohlenstoffnanoröhren und die zweite Komponente wiederum in Masterbatch-Form einsetzt.

11. Verwendung eines Masterbatch gemäß einem der Ansprüche 1 bis 6 zur Herstellung einer Charge von thermoplastischem Polymer, wobei der Masterbatch während der Herstellung dem Polymer in einer solchen Menge zugesetzt wird, dass er zwischen ungefähr 10 und ungefähr 40 Gew.-% der gesamten Mischung ausmacht.

## Revendications

1. Mélange-maître ignifugeant destiné à une utilisation dans un polymère thermoplastique, comprenant un polymère vecteur et un mélange de nanotubes de carbone et d'un second composant, dans lequel les nanotubes de carbone sont présents entre 0,1 % et 5 % en poids et le second composant est présent entre 5 % et 65 % en poids, **caractérisé en ce que** ledit second composant est choisi parmi les phyllosilicates, les silicates avec une structure cristalline tridimensionnelle, le carbonate de calcium, les borates de zinc, les stannates de zinc ou le cyanurate de mélamine ou un mélange de deux de ces composés ou plus, et est présent sous forme de poudres ayant des dimensions maximales en dessous d'environ 30 µm, des dimensions moyennes (D₅₀) en dessous d'environ 10 µm et des dimensions minimales supérieures à 1 µm.

2. Mélange-maître ignifugeant selon la revendication 1, dans lequel le second composant est l'aluminosilicate.

3. Mélange-maître ignifugeant selon l'une quelconque des revendications 1 et 2, dans lequel l'aluminosilicate a une granulométrie moyenne entre approximativement 2 et 7 µm.

4. Mélange-maître ignifugeant selon l'une quelconque des revendications 1 à 3, dans lequel le polymère vecteur a un indice de fluage supérieur au polymère thermoplastique auquel le mélange-maître doit être ajouté.

5. Mélange-maître ignifugeant selon la revendication 4, dans lequel ledit polymère vecteur est choisi parmi des poly(éthylènes) linéaires basse densité, des poly(éthylènes) basse ou haute densité, le poly(propylène), des copolymères de poly(propylène), et l'éthylène-acétate d'éthyle.

6. Mélange-maître ignifugeant selon l'une quelconque des revendications 1 à 5, dans lequel ledit polymère thermoplastique est un poly(éthylène) haute densité.

7. Procédé de production d'un mélange-maître ignifugeant de l'une quelconque des revendications 1 à 6, comprenant les phases suivantes :
- prémélange de nanotubes de carbone et de polymère vecteur sous forme de poudre dans un mélangeur, avec une vitesse de rotation de palette non supérieure à 500 tr/min,
- ajout au prémélange d'au moins un second composant consistant en un composé choisi parmi les phyllosilicates, les silicates avec une structure cristalline tridimensionnelle, le carbonate de calcium, les borates de zinc, les stannates de zinc ou le cyanurate de mélamine, ou un mélange de deux de ces composés ou plus, et le mélange, pour commencer à une vitesse de palette non supérieure à 500 tr/min et ensuite à une vitesse de palette entre 1 000 et 1 250 tr/min, avec le chauffage simultané du mélange à une température entre 40 et 70 °C ;
- apport du mélange toujours chaud ainsi obtenu dans une extrudeuse à double vis en corotation ou dans un malaxeur avec un axe rotatif et oscillatoire pourvu d'une zone de dégazage, dont le profil thermique augmente depuis la zone d'apport de mélange vers la zone d'évacuation, et est tel que la température de refoulement du matériau extrudé ou malaxé se situe approximativement entre 190 et 280 °C, en fonction du point de fusion du polymère vecteur ;
- découpe du mélange à la tête de l'extrudeuse ou du malaxeur, obtenant des mélanges-maîtres sous forme de granules cylindriques, ronds ou de type disque des dimensions souhaitées.

8. Procédé selon la revendication 7, dans lequel le polymère vecteur employé dans la phase de prémélange a une granulométrie entre 200 et 700 µm.

9. Procédé selon l'une quelconque des revendications 7 et 8, dans lequel le second composant est employé sous forme de poudres avec une granulométrie entre 1 et 30 µm.

10. Procédé selon l'une quelconque des revendications 7 à 9, dans lequel les nanotubes de carbone et le second composant sont employés tour à tour sous forme de mélange-maître.

11. Utilisation d'un mélange-maître de l'une quelconque des revendications 1 à 6 pour la production d'un lot de polymères thermoplastiques, dans laquelle, pendant la production, ledit mélange-maître est ajouté audit polymère dans une quantité de nature à constituer entre approximativement 10 % et approximativement 40 % en poids du mélange total.
